(19) **Europäisches Patentamt / European Patent Office / Office européen des brevets**

(11) **EP 4 332 275 A1**

(12) **EUROPEAN PATENT APPLICATION**
published in accordance with Art. 153(4) EPC

(43) Date of publication:
**06.03.2024 Bulletin 2024/10**

(21) Application number: **22795922.8**

(22) Date of filing: **28.04.2022**

(51) International Patent Classification (IPC):
**C25D 7/06** (2006.01)    **C25D 5/12** (2006.01)
**C25D 5/14** (2006.01)    **C25D 5/16** (2006.01)
**C25D 5/26** (2006.01)    **C25D 5/50** (2006.01)
**H01M 4/66** (2006.01)

(52) Cooperative Patent Classification (CPC):
**C25D 5/12; C25D 5/14; C25D 5/16; C25D 5/36;**
**C25D 5/50; C25D 7/06; H01M 4/66;** Y02E 60/10

(86) International application number:
**PCT/JP2022/019466**

(87) International publication number:
**WO 2022/231009 (03.11.2022 Gazette 2022/44)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **28.04.2021 JP 2021076893**

(71) Applicant: **Toyo Kohan Co., Ltd.**
**Tokyo 141-8260 (JP)**

(72) Inventors:
• **KATSURA, Keishi**
 **Kudamatsu-shi Yamaguchi 744-8611 (JP)**
• **UENO, Misato**
 **Kudamatsu-shi Yamaguchi 744-8611 (JP)**

• **HORIE, Shinichirou**
 **Kudamatsu-shi Yamaguchi 744-8611 (JP)**
• **TSUTSUMI, Etsuro**
 **Kudamatsu-shi Yamaguchi 744-8611 (JP)**
• **HARADA, Satoko**
 **Kudamatsu-shi Yamaguchi 744-8611 (JP)**
• **KOYANAGI, Toshifumi**
 **Kudamatsu-shi Yamaguchi 744-8611 (JP)**
• **OBATA, Shunki**
 **Kudamatsu-shi Yamaguchi 744-8611 (JP)**
• **YOSHIOKA, Koh**
 **Kudamatsu-shi Yamaguchi 744-8611 (JP)**

(74) Representative: **Hoffmann Eitle**
**Patent- und Rechtsanwälte PartmbB**
**Arabellastraße 30**
**81925 München (DE)**

(54) **SURFACE TREATED STEEL FOIL FOR CURRENT COLLECTOR AND METHOD FOR MANUFACTURING SAME**

(57)    [Object]
To provide a surface treated steel foil that is for a current collector and that has hydrogen barrier properties suitable for a battery using a hydrogen occluding alloy.
[Solving Means]
The surface treated steel foil for a current collector has a first surface on which a hydrogen occluding alloy is disposed and a second surface located on a side opposite to the first surface. The surface treated steel foil for a current collector is characterized by having an iron-nickel alloy layer that is laminated on at least one surface side of the first surface side and the second surface side on the side opposite to the first surface side of a metallic base material composed of steel foil and that restrains permeation or diffusion of hydrogen in the surface treated steel foil for a current collector, and is characterized in that at least one layer included in the iron-nickel alloy layer has a thickness of not less than 0.5 um.

**(Cont. next page)**

EP 4 332 275 A1

FIG. 1(a)

10

10b    30

20

10a

FIG. 1(b)

10

10b    20

30

10a

FIG. 1(c)

10

10b

30

20

30

10a

**Description**

[Technical Field]

The present invention relates to a surface treated steel foil to be used particularly suitably for a current collector of a secondary battery or the like, and a method for manufacturing the same.

[Background Art]

Conventionally, a nickel hydrogen battery and a lithium ion battery have been known as a secondary battery to be adopted for in-vehicle use or the like. As kinds of electrode structure of these secondary batteries, there are known a monopolar electrode in which positive electrode layers or negative electrode layers are formed on both surfaces of a current collector, and a bipolar electrode in which a positive electrode layer (positive electrode active material layer) and a negative electrode layer (negative electrode active material layer) are formed on both surfaces of a current collector.

A bipolar battery is configured by laminating the above-mentioned bipolar electrodes with an electrolyte, a separator, or the like interposed therebetween, and accommodating them in a single battery case. With this configuration, the electrodes can be laminated in a series circuit, and hence, it is known that the internal resistance of the battery can be reduced, and it is easy to increase the working voltage and the output. In addition, together with battery performance, by omitting or reducing the number of members such as leads for taking out a current by battery design, the volume or weight of the battery can be reduced as compared to the conventional batteries using monopolar electrodes, and hence, it is considered that enhancement of a battery volume and weight energy density can be realized.

For example, PTL 1 mentioned below discloses use of a metallic foil such as a nickel foil as a current collector of a bipolar battery.

[Citation List]

[Patent Literature]

[PTL 1]
Japanese Patent Laid-open No. 2020-053401

[Summary]

[Technical Problem]

The present inventors, in proceeding with developments using a metallic foil such as a steel foil as a metallic material suitable for a current collector, have made extensive and intensive endeavors for enhancing battery characteristics. During the developments, the inventors have found out that, by restraining permeation of hydrogen in the metallic material used as a current collector, deterioration of battery performance can be reduced.

In other words, for example, in a nickel hydrogen battery, hydrogen, generally a hydrogen occluding alloy, is used as an active material on a negative electrode. In the conventional monopolar electrode, it has been sufficient to provide a surface with liquid electrolyte resistance according to the kind of the battery, but in the case of the above-mentioned bipolar electrode, a phenomenon in which hydrogen present on the negative electrode side moves in the metallic material and permeates to the positive electrode side easily occurs, and when such a permeation phenomenon occurs, it is considered that battery performance is liable to be lowered.

The present invention has been made in consideration of such a problem, and it is an object of the present invention to provide a surface treated steel foil for a current collector that has both hydrogen barrier properties (performance of restraining permeation of hydrogen) required of a bipolar battery and liquid electrolyte resistance or the like required of a secondary battery.

[Solution to Problem]

In order to solve the problem exemplified above, a surface treated steel foil for a current collector in one embodiment of the present invention is (1) a surface treated steel foil that is for a current collector and that has a first surface on which a hydrogen occluding alloy is disposed and a second surface located on a side opposite to the first surface. The surface treated steel foil includes an iron-nickel alloy layer that is laminated on at least one surface side of the first surface side and the second surface side on the side opposite to the first surface side of a metallic base material composed of steel foil and that restrains permeation or diffusion of hydrogen in the surface treated steel foil for a current collector. At least one layer included in the iron-nickel alloy layer has a thickness of not less than 0.5 $\mu$m.

In the surface treated steel foil for a current collector described in (1) above, (2) it is preferable that iron-nickel alloy layers be formed on both the first surface side and the second surface side of the surface treated steel foil for a current collector, and the total thickness of the iron-nickel alloy layers on both surface sides be not less than 0.7 $\mu$m.

In addition, in the surface treated steel foil for a current collector described in (1) or (2) above, (3) it is preferable that the metallic base material be a low carbon steel or an ultra low carbon steel.

In the surface treated steel foil for a current collector described in any one of (1) to (3) above, (4) it is preferable that a deposition amount of nickel in the iron-nickel alloy layers be 0.80 to 53.4 g/m$^2$.

In the surface treated steel foil for a current collector described in any one of (1) to (4) above, (5) it is preferable that the surface treated steel foil further have a metallic layer formed on the iron-nickel alloy layer, and the metallic layer be a nickel layer.

In the surface treated steel foil for a current collector described in (5) above, (6) it is preferable that the metallic layer be a nickel layer, and a total nickel deposition amount in the iron-nickel alloy layer and the nickel layer be 2.0 to 53.4 g/m$^2$.

In the surface treated steel foil for a current collector described in any one of (1) to (6) above, (7) it is preferable that a hydrogen permeation current density measured electrochemically be not more than 20 $\mu$A/cm$^2$. It is to be noted that the hydrogen permeation current density is an increment of oxidation current measured on a hydrogen detection side when a potential of -1.5 V is applied on a hydrogen generation side under a condition in which a potential on the hydrogen detection side in a liquid electrolyte at 65°C is +0.4 V. A reference electrode for potentials on the hydrogen detection side and the hydrogen generation side is Ag/AgCl.

In the surface treated steel foil for a current collector described in any one of (1) to (7) above, (8) it is preferable that a roughened nickel layer be formed at an outermost surface on either one of the first surface side and the second surface side, and a three-dimensional surface property parameter Sa of the roughened nickel layer be 0.2 to 1.3 $\mu$m.

In addition, in order to solve the problem exemplified above, a method for manufacturing a surface treated steel foil for a current collector in one embodiment of the present invention (9) includes a step of forming an iron-nickel alloy layer that restrains permeation or diffusion of hydrogen in the surface treated steel foil for a current collector, on at least one surface side of a first surface side on which a hydrogen occluding alloy is disposed and a second surface side on a side opposite to the first surface side of a metallic base material.

In the method for manufacturing a surface treated steel foil for a current collector described in (9) above, (10) it is preferable that a deposition amount of nickel in the iron-nickel alloy layer be 0.80 to 53.4 g/m$^2$.

[Advantageous Effects of Invention]

According to the present invention, it is possible to provide a surface treated steel foil for a current collector that has both hydrogen barrier properties suitable for a bipolar battery and liquid electrolyte resistance or the like required of a secondary battery.

[Brief Description of Drawing]

[FIG. 1(a)]

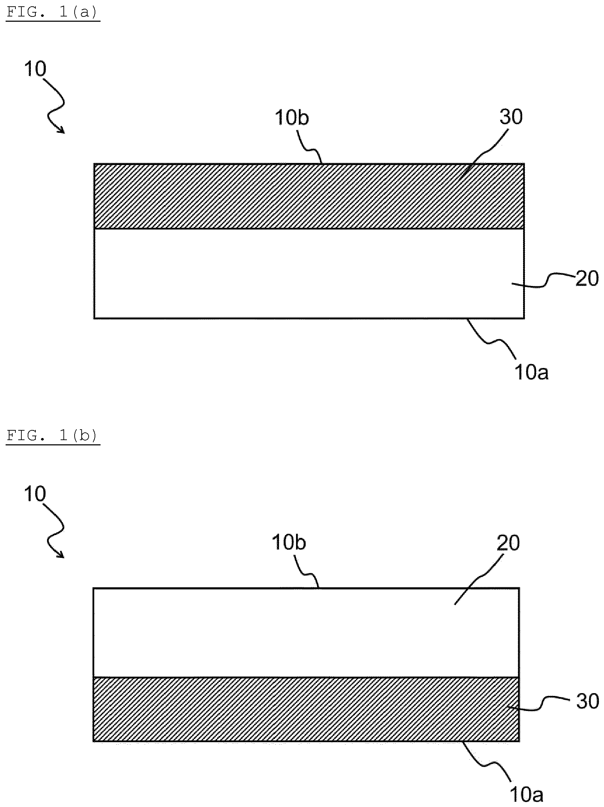

FIG. 1(a) is a diagram schematically depicting a surface treated steel foil for a current collector of the present embodiment.
[FIG. 1(b)]
FIG. 1(b) is a diagram schematically depicting the surface treated steel foil for the current collector of the present embodiment.
[FIG. 1(c)]

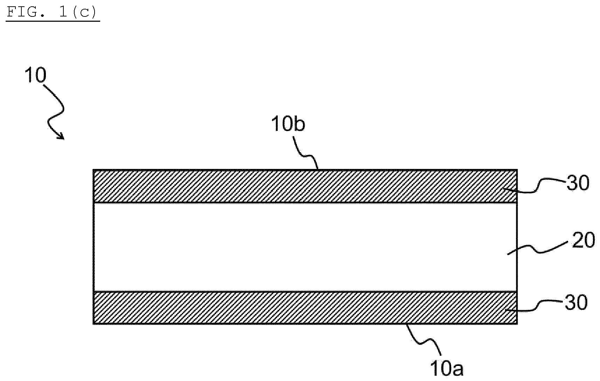

FIG. 1(c) is a diagram schematically depicting the surface treated steel foil for the current collector of the present embodiment.
[FIG. 2(a)]

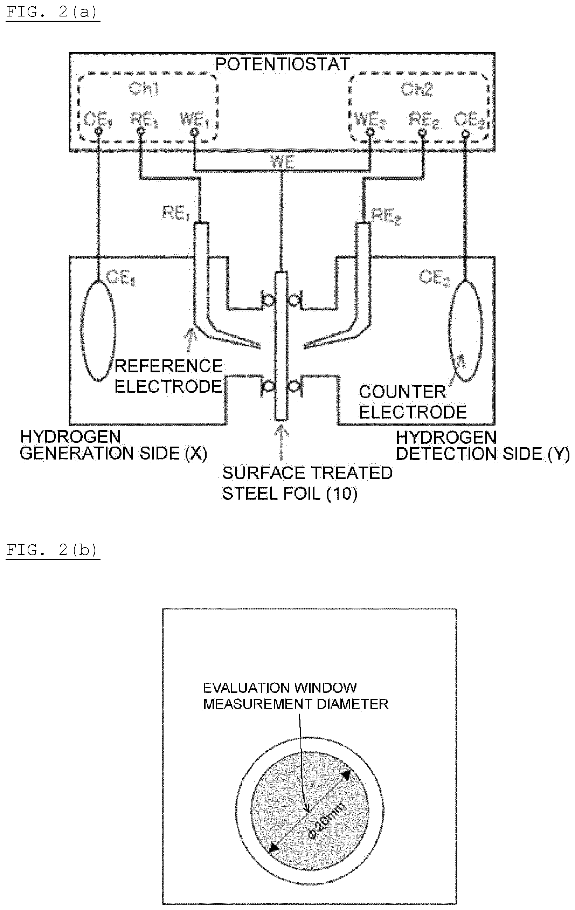

FIG. 2(a) is a schematic diagram of an apparatus for measuring hydrogen barrier properties of a surface treated steel foil 10 for a current collector of the present embodiment.
[FIG. 2(b)]
FIG. 2(b) is a schematic diagram of the apparatus for measuring hydrogen barrier properties of the surface treated steel foil 10 for the current collector of the present embodiment.
[FIG. 2(c)]

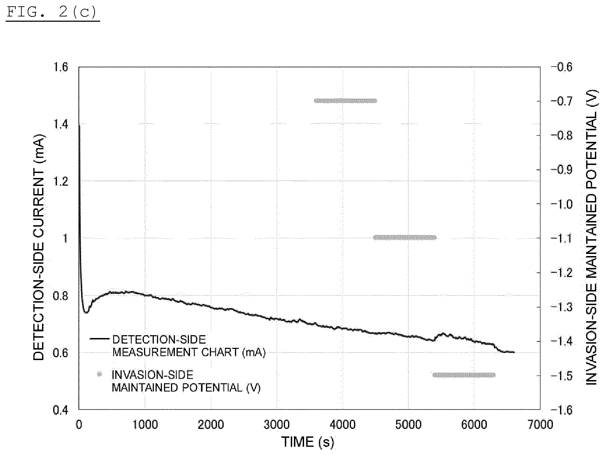

FIG. 2(c) is an explanation diagram of a method for measuring hydrogen barrier properties of the surface treated steel foil 10 for the current collector of the present embodiment.
[FIG. 2(d)]

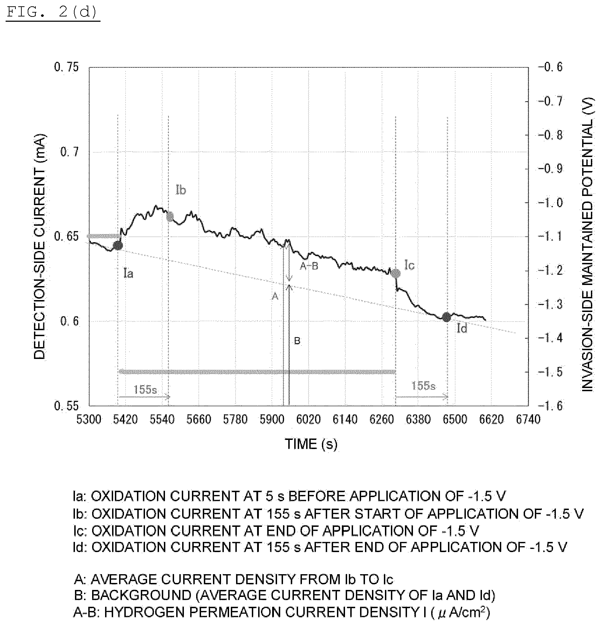

FIG. 2(d) is an explanation diagram of the method for measuring hydrogen barrier properties of the surface treated steel foil 10 for the current collector of the present embodiment.
[FIG. 2(e)]

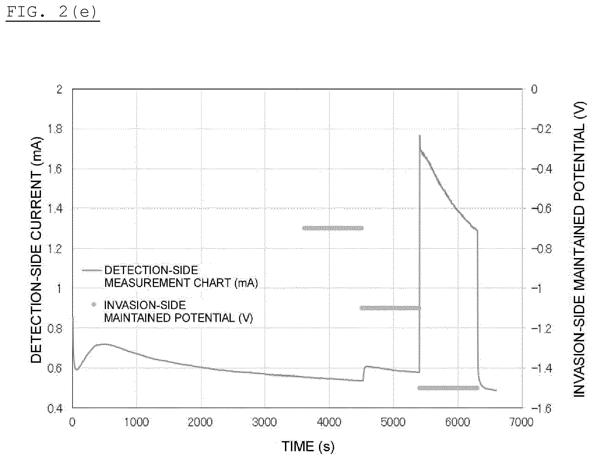

FIG. 2(e) is an explanation diagram of the method for measuring hydrogen battier properties of the surface treated steel foil 10 for the current collector of the present embodiment.
[FIG. 3]

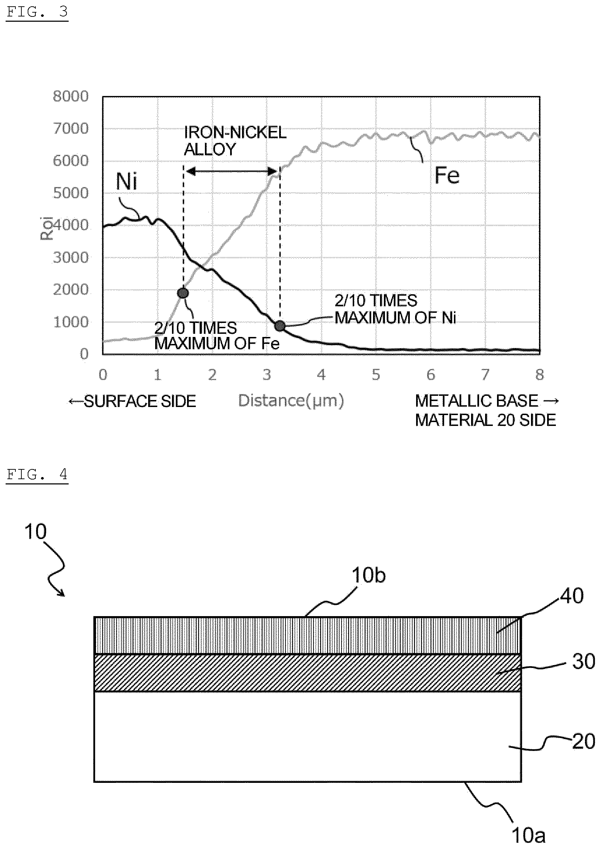

FIG. 3 is a diagram for explaining a method for calculating the thickness of an iron-nickel alloy layer in the present embodiment.
[FIG. 4]
FIG. 4 is a diagram schematically depicting a surface treated steel foil for a current collector of another embodiment.
[FIG. 5(a)]

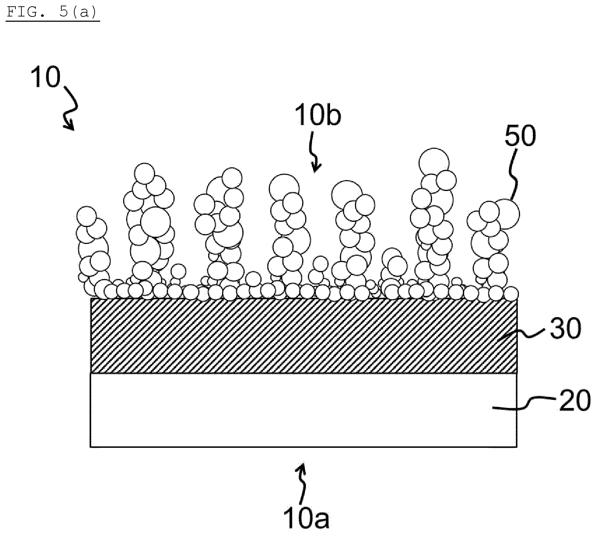

FIG. 5(a) is a diagram schematically depicting a surface treated steel foil for a current collector of another embodiment.
[FIG. 5(b)]

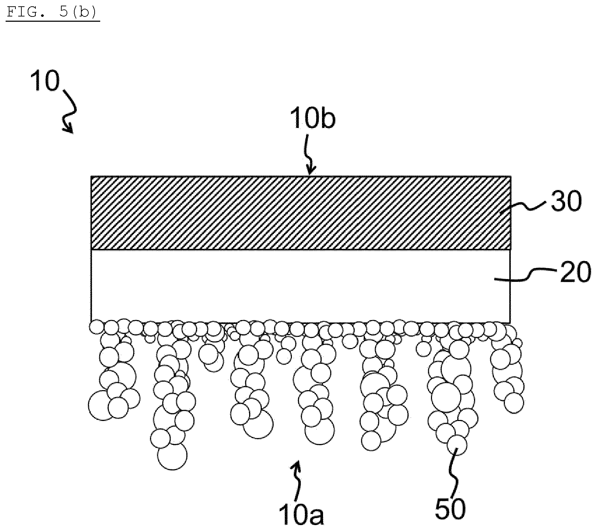

FIG. 5(b) is a diagram schematically depicting a surface treated steel foil for a current collector of another embodiment.
[FIG. 6]

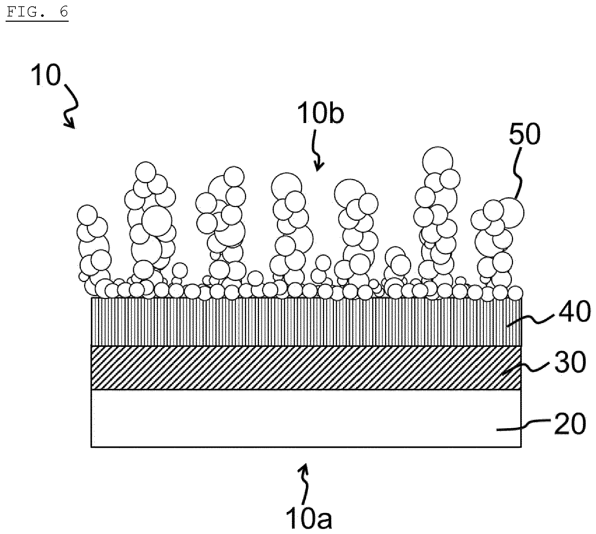

FIG. 6 is a diagram schematically depicting a surface treated steel foil for a current collector of another embodiment.

[Description of Embodiment]

«Surface treated steel foil 10 for current collector»

An embodiment for carrying out a surface treated steel foil for a current collector of the present invention will be described below.
FIG. 1 is a diagram schematically depicting an embodiment of a surface treated steel foil 10 for a current collector of the present invention. The surface treated steel foil 10 for the current collector of the present embodiment may be applied not only to current collectors of a bipolar battery but also to a current collector for a positive electrode or a negative electrode in a monopolar battery. The battery may be a secondary battery or a primary battery.
The surface treated steel foil 10 for the current collector of the present embodiment has a metallic base material 20 and an iron-nickel alloy layer 30. The surface treated steel foil 10 for the current collector has a first surface 10a and a second surface 10b on the side opposite to the first surface 10a. On the side of the first surface 10a, there is disposed a hydrogen occluding alloy as a negative electrode material in assembling a battery. Meanwhile, on the side of the second surface 10b, there is disposed a positive electrode material in the case of a nickel-hydrogen battery of a bipolar electrode structure, for example.
The surface treated steel foil 10 for the current collector of the present embodiment is characterized by having the iron-nickel alloy layer 30 as described above. The iron-nickel alloy layer 30 may be disposed on the side of the above-mentioned second surface 10b as depicted in FIG. 1(a), or may be disposed on the side of the first surface 10a as depicted in FIG. 1(b). In addition, the iron-nickel alloy layer 30 may be disposed on both the side of the first surface 10a and the side of the second surface 10b as depicted in FIG. 1(c).
In addition, the iron-nickel alloy layer 30 may be disposed at an outermost surface of the surface treated steel foil 10 for the current collector as depicted in FIGS. 1(a) to 1(c), or may be disposed inside (at an intermediate position) of the surface treated steel foil 10 for the current collector as depicted in FIG. 4.
The iron-nickel alloy layer 30 has a function of restraining permeation or diffusion of hydrogen in the surface treated steel foil for the current collector.

<Metallic base material 20>

As a steel foil of the metallic base material 20 used for the surface treated steel foil 10 for the current collector of the present embodiment, an iron-based metallic base material containing Cr and other additive metallic elements in an amount of less than 1.0 wt% is preferable. Specifically, a low carbon steel (carbon content 0.01 to 0.15 wt%) represented by a low carbon aluminum-killed steel, an ultra low carbon steel having a carbon content of less than 0.01 wt%, or a non-ageing ultra low carbon steel obtained by adding Ti, Nb, or the like to the ultra low carbon steel is preferably used.
The thickness of the metallic base material 20 used for the surface treated steel foil 10 for the current collector of the present embodiment is preferably in the range of 0.01 to 0.5 mm. In the case of use as a current collector of a battery in which a volume and weight energy density is considered to be important, the thickness is more preferably 0.01 to 0.3 mm, and further preferably 0.025 to 0.1 mm, in terms of strength, desired battery capacity, and the like. For measurement of the thickness of the metallic base material 20, thickness measurement by observation of a section by an optical microscope or a scanning electron microscope (SEM) is preferably used. In addition, as measurement of the thickness before a surface treatment, in other words, before nickel plating or iron-nickel alloy plating, thickness measurement by use of a micrometer or the like is applicable.

Note that, as the metallic base material 20, a rolled steel foil is normally used, but an electrolytic iron foil manufactured by electroplating may also be adopted.

<Iron-nickel alloy layer 30>

The iron-nickel alloy layer 30 included in the surface treated steel foil 10 for the current collector of the present embodiment is an alloy layer containing iron (Fe) and nickel (Ni) and is a metallic layer including an alloy composed of iron and nickel (also called an "iron-nickel alloy" or an "Fe-Ni alloy"). Note that an alloy state composed of iron and nickel may be any of a solid solution, a eutectoid or eutectic, and a compound (intermetallic compound) or may include them in a coexistent state.

The iron-nickel alloy layer 30 included in the surface treated steel foil 10 for the current collector of the present embodiment may contain other metallic elements and unavoidable impurities insofar as the problem to be solved by the present invention can be solved. For example, the iron-nickel alloy layer 30 may contain metallic elements such cobalt (Co) and molybdenum (Mo) and additive elements such as boron (B). Note that the proportion of metallic elements other than iron (Fe) and nickel (Ni) in the iron-nickel alloy layer 30 is preferably not more than 10 wt%, more preferably not more than 5 wt%, and further preferably not more than 1 wt%. Since the iron-nickel alloy layer 30 may be a binary alloy substantially composed of only iron and nickel, the lower limit for the content of metallic elements other than unavoidable impurities is 0%.

The kinds and amounts of the other metallic elements contained can be measured by known means such as an X-ray fluorescence (XRF) measuring device and glow discharge optical emission spectroscopy (GDS).

A method for forming the iron-nickel alloy layer 30 included in the surface treated steel foil 10 for the current collector of the present embodiment is preferably a method by plating or plating and a heat treatment, and examples of the plating include electroplating, electroless plating, hot dip coating, and dry plating. Of these plating methods, the electroplating method is particularly preferred in terms of cost, film thickness control, and the like.

For example, examples of the plating method include a method of forming an Ni plating layer on at least one surface of the metallic base material 20 by such a method as electroplating and thereafter diffusing iron (Fe) in the metallic base material 20 and nickel (Ni) by a thermal diffusion treatment or the like to effect alloying, and a method of forming an alloy layer by FeNi alloy plating. Note that these manufacturing methods will be described in detail later.

Next, hydrogen barrier properties of the iron-nickel alloy layer 30 included in the surface treated steel foil 10 for the current collector of the present embodiment will be described.

In a process of repeating experiments for enhancing battery performance, the present inventors found occurrence of a voltage drop (self-discharge) phenomenon due to an unknown cause and found out that restraining permeation of hydrogen in the surface treated steel foil 10 for the current collector is effective for resolving the phenomenon.

The cause of occurrence of hydrogen permeation and the reason why the occurrence of the above-mentioned voltage drop (self-discharge) can be restrained by restraining the hydrogen permeation in the surface treated steel foil 10 for the current collector have not yet been elucidated, but the present inventors have predicted as follows.

Specifically, in the present embodiment, in the case where the surface treated steel foil 10 for the current collector is used for an electrode of a bipolar battery, a hydrogen occluding alloy used as a negative electrode material is disposed on at least one surface side of the surface treated steel foil 10 for the current collector, and a positive electrode material is disposed on the opposite side. In this case, an environment in which hydrogen is abundant (negative electrode) and an environment in which hydrogen is little (positive electrode) are present on opposite sides of the surface treated steel foil 10 for the current collector, so that a hydrogen concentration gradient is generated. The present inventors have expected that, by permeation or movement of hydrogen through the surface treated steel foil 10 for the current collector due to some kind of trigger, the permeated hydrogen reacts on the positive electrode, to cause the occurrence of the above-mentioned voltage drop (self-discharge).

Such a voltage drop caused by permeation of hydrogen is accelerated in reaction as the number of states in which hydrogen is liable to permeate is larger in the environment of use of a battery, and it is considered that the length of time taken until the voltage drop occurs is shortened, in other words, deterioration of battery performance is accelerated. As a condition for hydrogen to be liable to permeate, it is considered that hydrogen is more liable to permeate as the above-mentioned hydrogen concentration gradient is greater. In addition to the hydrogen concentration gradient, it is considered that a state in which voltages are applied to both surfaces of the surface treated steel foil further accelerates the hydrogen permeation. In other words, in a battery using a hydrogen occluding alloy, a battery with a great concentration gradient such as a nickel-hydrogen battery, or a secondary battery with frequent charging and discharging, it is highly possible that the hydrogen permeation constitutes a cause of gradual lowering in battery performance with time. Meanwhile, the gradual lowering in the battery performance may largely come from other factors, and the hydrogen permeation phenomenon is difficult to recognize; hence, it has not been elucidated in the conventional use and development of monopolar batteries. During the present inventors' repetition of experiments in developing a surface treated steel foil for a current collector for use in bipolar batteries, they have found out that enhancement of hydrogen barrier properties of the iron-nickel alloy layer contributes to restraining of deterioration of battery performance. Therefore, the surface treated steel foil of the present embodiment is used suitably especially for a current collector in a battery using a hydrogen occluding alloy, particularly in a bipolar battery; in addition, the surface treated steel foil of the present embodiment can be suitably used also for other batteries which do not use a hydrogen occluding alloy but contain or generate hydrogen, since it is considered possible that such batteries might undergo gradual deterioration of battery performance due to hydrogen permeation that has not been recognized.

In the following description, a hydrogen invasion side is also referred to as a hydrogen generation side and is the side where the hydrogen occluding alloy is disposed, namely, the side of the first surface 10a of the surface treated steel foil 10 for the current collector. Besides, a hydrogen detection side is a side opposite to the hydrogen invasion side and is the positive electrode side of a bipolar electrode structure, namely, the side of the second surface 10b of the surface treated steel foil 10 for the current collector.

Next, evaluation of hydrogen barrier properties will be described. In the case where hydrogen permeates and moves in the surface treated steel foil 10 for the current collector as described above, hydrogen atoms reaching the hydrogen detection side from the hydrogen invasion side is oxidized, to become hydrogen ions. The value of an oxidation current in this instance varies according to the amount of hydrogen reaching a hydrogen detection surface, and hence, by the current value detected, the hydrogen barrier properties of the surface treated steel foil 10 for the current collector can be digitized and evaluated (Tooru Tsuru, Tokyo Institute Of Technology, Zairyo-to-Kankyo (Materials and Environments), 63, 3-9(2014), Electrochemical Measurements for Hydrogen Entry and Permeation of Steel).

As a result of the above-mentioned expectation, the present inventors made measurement and evaluation, and in the present embodiment, have come to a conclusion that, in order to restrain the occurrence of the above-mentioned voltage drop (self-discharge), it is preferable that the surface treated steel foil 10 for the current collector of the present embodiment have a hydrogen permeation current density, which is obtained from the oxidation current measured electrochemically, of not more than 20 $\mu A/cm^2$. Note that the measuring conditions for the hydrogen permeation current density in the present embodiment were a liquid electrolyte at 65°C, a reference electrode of silver/silver chloride (Ag/Ag-Cl), a potential on the hydrogen generation side of -1.5 V, and a potential on the hydrogen detection side of +0.4 V. Note that all the numerical values of potential used in the measuring method for the hydrogen permeation current density in the present embodiment are based on the reference electrode of silver/silver chloride (Ag/AgCl).

As a specific example of the measuring method for the hydrogen permeation current density in the present embodiment, a current value (current density) is detected by use of a measuring instrument configured as depicted in FIG. 2(a), so that the hydrogen barrier properties of the surface treated steel foil 10 for the current collector can be digitized and evaluated. The measuring instrument depicted in FIG. 2(a) will be described below.

Two cells, i.e., a cell X for hydrogen generation and a cell Y for detection of permeated hydrogen, are prepared, and a test piece (sample) of the surface treated steel foil 10 for the current collector is disposed between the two measuring cells. An alkaline liquid electrolyte is accommodated in each of the measuring cells, and reference electrodes (RE1 and RE2) and counter electrodes (CE1 and CE2) are immersed in the electrolyte. An Ag/AgCl electrode in a saturated KCl solution is used as the reference electrode, and platinum (Pt) is used as the counter electrode. In addition, the alkaline liquid electrolyte has a composition including KOH, NaOH, and LiOH, and its temperature is 65°C. Besides, as depicted in FIG. 2(b), the measured diameter of the surface treated steel foil 10 for the current collector is φ20 mm (measured area: 3.14 cm$^2$).

Potential control and current measurement on the hydrogen invasion side and the hydrogen detection side are conducted by use of a potentiostat as depicted in FIG. 2(a). As the potentiostat, for example, a "multi-electrochemical measurement system HZ-Pro" made by HOKUTO DENKO CORPORATION can be used. Note that connection of the sample of the surface treated steel foil 10 for the current collector to be evaluated and electrodes can be conducted as depicted in FIG. 2(a).

The sample is polarized to a cathode (base potential) on the hydrogen generation side, hydrogen is generated on the surface of the sample, and hydrogen is caused to invade. The potential is applied stepwise at-0.7 V, -1.1 V, and -1.5 V, each potential being applied for 15 minutes. The reason why the potential is applied thus stepwise is to suppress an influence at the time of variation in the potential, and to obtain a stable plot. Note that measurement plots are obtained at intervals of five seconds.

Note that, in general, in a nickel-hydrogen battery using a nickel hydroxide compound as a positive electrode and a hydrogen occluding alloy as a negative electrode, an operating potential of the negative electrode in charge-discharge reactions of the battery is around -1.1 V. In the above-mentioned measuring method applicable to the present embodiment, as a technique by which it is possible to confirm the effect of the hydrogen barrier properties without using a hydrogen occluding alloy, measuring conditions for more conspicuous generation of hydrogen were investigated. Further, it was determined to use, for calculation of the hydrogen permeation current density I ($\mu A/cm^2$), variation in

oxidation current (hereinafter referred to also as the oxidation current variation) at the time when the applied potential on the hydrogen generation side is -1.5 V.

In the case where hydrogen atoms permeate from the hydrogen generation side to the hydrogen detection side, oxidation of the permeated hydrogen atoms on the hydrogen detection side results in generation of an oxidation current which is measured by the potentiostat on the hydrogen detection side. Hence, by this oxidation current variation, the hydrogen permeability of the surface treated steel foil 10 for the current collector can be digitized and evaluated. Note that, on the hydrogen detection side, the potential applied is maintained in order to accelerate the oxidation of hydrogen atoms into hydrogen ions and to make clear the peak of the oxidation current.

In a nickel-hydrogen battery using a nickel hydroxide compound as the positive electrode and a hydrogen occluding alloy as the negative electrode, a positive electrode operating potential in charge-discharge reactions of the battery is generally around +0.4 V. In view of this, in the present measuring method, a potential of +0.4 V was applied on the detection side and was maintained during measurement. Note that, before applying the potential on the hydrogen generation side, the hydrogen detection side was maintained at the above-mentioned potential for 60 minutes for stabilization of current value. In addition, after the application of the potential on the hydrogen generation side is finished, that is, after the application of -1.5 V for 15 minutes is finished and the application on the hydrogen generation side becomes zero, application of +0.4 V on the hydrogen detection side is maintained for five minutes, for calculation of background. The measurement plots are at intervals of five seconds.

In other words, as a pre-step of evaluation by the measurement, first, an operation is started by applying +0.4 V on the hydrogen detection side, and next, the application is continued for 60 minutes to stabilize the current value, after which the application on the hydrogen generation side is started as practical evaluation (15 minutes at each potential, and a total of 45 minutes).

By the oxidation current variation on the hydrogen detection side obtained by the above-mentioned technique, the hydrogen permeation current density I ($\mu$A/cm$^2$) can be calculated. A plot of the thus obtained oxidation current and a digitized image of the hydrogen permeation current density I ($\mu$A/cm$^2$) are depicted in FIGS. 2 (c) to 2 (e).

FIG. 2(c) is a diagram depicting the current value measurement of a whole part inclusive of a pre-step and a post-step for evaluation. In addition, FIG. 2(d) is a diagram depicting variation in the current value for practical evaluation and is a diagram obtained by enlarging a part substantially ranging from 5,300 to 6,500 seconds in FIG. 2(c). FIG. 2(e) is a diagram for comparison of the present invention and is a diagram depicting variation in the current value in the case where current value measurement similar to that of FIG 2(c) is conducted by use of a surface treated steel foil in which a nickel plating layer having a thickness of 1.0 um is provided on a steel foil having a thickness of 50 um and no heat treatment is conducted, that is, which is in a state not having an iron-nickel alloy layer. According to FIG. 2(e), it can be confirmed that, in the case of the surface treated steel foil not having the iron-nickel alloy layer constituting a characteristic feature of the present invention, the detection side current value during application of -1.5 V for 15 minutes is clearly high as compared to that in the case of the metallic foil depicted in FIG. 2(c).

Note that, in the present embodiment, the hydrogen permeation current density I ($\mu$A/cm$^2$) can be calculated by the following formula, based on oxidation current variation at the time when the potential applied on the hydrogen generation side is -1.5 V as depicted in FIG. 2(d).

$$\text{Hydrogen permeation current density I } (\mu\text{A/cm}^2) =$$

$$((\text{Average value of oxidation current from Ib to Ic})/\text{S}) -$$

$$((\text{Average of Ia and Id})/\text{S})$$

where Ia ($\mu$A) is oxidation current at five seconds before application of -1.5 V, Ib ($\mu$A) is oxidation current at 155 seconds after the start of application of -1.5 V, Ic ($\mu$A) is oxidation current at the time when application of -1.5 V is finished, Id ($\mu$A) is oxidation current at 155 seconds after the finish of application of -1.5 V, and S (cm$^2$) is the measurement area (evaluation area) of the measurement test piece.

It can be determined that, when the hydrogen permeation current density I ($\mu$A/cm$^2$) calculated by the above formula is small, permeation of hydrogen is restrained, in other words, hydrogen barrier properties are high, whereas, when the hydrogen permeation current density I ($\mu$A/cm$^2$) is large, permeation of hydrogen occurs easily.

In the present embodiment, it has been concluded that, in the case where the hydrogen permeation current density electrochemically measured as described above is not more than 55 $\mu$A/cm$^2$, such a hydrogen permeation current density is suitable for a bipolar electrode in terms of hydrogen barrier properties inside the surface treated steel foil 10 for the current collector. It is more preferable that the hydrogen permeation current density be not more than 20 $\mu$A/cm$^2$ in terms of restraining more of the voltage drop. It is to be noted that the hydrogen permeation current density is an increment of oxidation current measured on the hydrogen detection side (anode side) when a potential of -1.5 V is applied on the hydrogen generation side (cathode side) under a condition where the potential on the hydrogen detection side is +0.4 V (vs Ag/AgCl) in a liquid electrolyte at 65°C.

Note that it is known that, in general, different metallic materials have different diffusion coefficients of hydrogen according to the respective kinds thereof, and in order to restrain defects and a hydrogen embrittlement phenomenon due to hydrogen in metal according to the use of the metallic material, a metallic material that restrains invasion of hydrogen may be demanded. Examples of such a case include an example in which a high alloy steel is used for restraining delayed fracture of a high strength bolt, and an example in which a titanium welded member is used for restraining cracking of a pressure reaction vessel.

However, such materials and uses are not based on the assumption of hydrogen invasion under an environment where the hydrogen amount is positively enhanced, such as placing a hydrogen occluding alloy on a surface. In addition, a problem in these technologies is an influence hydrogen remaining in the metal has on mechanical properties of the metal itself, and there is generated no problem regarding the influence of permeation of hydrogen through a metallic material on the other surface side.

In addition, as hydrogen permeation in a battery material, it is known that, for example, hydrogen impermeability is demanded as a gas impermeability in a separator of a fuel cell. It is to be noted, however, that, in fuel cells, it has been considered that hydrogen permeation is a problem mainly in the case of a carbon separator, whereas hydrogen permeation is not present and is not a problem in the cases where a stainless steel or aluminum separator is used. Besides, since corrosion resistance in a sulfuric acid atmosphere is indispensable to the separator of a fuel cell and application of a steel sheet is difficult, there has been found no problem based on an assumption that a steel sheet is applied. On the other hand, in a current collector in a bipolar electrode structure in which one surface of the current collector is made of a negative electrode active material layer and the other surface is made of a positive electrode active material layer, it has been verified that a hydrogen permeation phenomenon is generated easily as compared to the fuel cell and it may influence battery performance. This problem is considered to have been verified due to differences in battery structure, object part, internal environment, and the like from the fuel cell.

Next, the thickness of the iron-nickel alloy layer 30 will be described.

From the viewpoint of restraining the hydrogen permeation as mentioned above, as the thickness of the iron-nickel alloy layer 30 included in the surface treated steel foil 10 for the current collector of the present embodiment, the thickness of at least one layer is required to be not less than 0.5 um, is preferably not less than 0.6 um, and more preferably not less than 0.7 um. Although the upper limit for the thickness is not particularly present, a too large thickness increases the proportion of a hard layer in the surface treated steel foil for the current collector, causes the surface treated steel foil for the current collector itself to be liable to crack, and increases resistance, so that the thickness per one surface is preferably not more than 7.5 um, and more preferably not more than 6 um. A total thickness of both surfaces is preferably not more than 15 um, more preferably not more than 12 um, further preferably not more than 7 $\mu$m, and still further preferably not more than 3.5 um. Particularly in the case of using a continuous steel strip as a base material, that is, in the case of subjecting a continuous steel strip to a surface treatment to obtain the surface treated steel foil for the current collector that has the iron-nickel alloy layer of the present embodiment, the thickness per one surface is preferably not more than 6 $\mu$m, and more preferably not more than 3.5 um, in terms of avoiding nonuniformity in plating deposition amount control and a heat treatment.

Note that, as described above, the whole part of the surface treated steel foil 10 for the current collector may be the iron-nickel alloy layer 30. In this case, the metallic base material 20 is not included, and hence, in manufacturing the surface treated steel foil 10 for the current collector, the surface treated steel foil 10 for the current collector can be manufactured by a method in which, for example, the iron-nickel alloy layer 30 is formed on a support by electroplating and thereafter the alloy layer is peeled off. In addition, the thickness of the surface treated steel foil 10 for the current collector in this case is preferably 4 to 25 $\mu$m.

Note that the iron-nickel alloy layer 30 may be disposed on both the first surface 10a side and the second surface 10b side as depicted in FIG. 1(c) as mentioned above, and in that case, the iron-nickel alloy layer 30 is required to be in a thickness of 0.5 um on at least one surface side, from the viewpoint of hydrogen barrier properties. From a viewpoint of more enhancing the hydrogen barrier properties, the total thickness of the iron-nickel alloy layers on both surface sides is preferably not less than 0.7 um, and more preferably not less than 0.8 um. The thicknesses of the iron-nickel alloy layers on both surface sides may be the same or different, and it is sufficient if the iron-nickel alloy layer is formed in a thickness of not less than 0.5 um on at least one surface side.

Note that a method of calculating the thickness of the iron-nickel alloy layer 30 in the present embodiment will be described. As the calculating method for the thickness of the iron-nickel alloy layer 30 in the present embodiment, by an analysis of SEM-energy dispersive X-ray spectroscopy (EDX) of a section of the surface treated steel foil for the current collector, a quantitative analysis of Ni and Fe in a depth of down to at least 10 um in the thickness direction from the front surface side can be performed. In the case where the diffusion layer thickness exceeds 10 um, the quantitative analysis is conducted down to a required depth.

An example of the method for obtaining the thickness of the iron-nickel alloy layer 30 from a graph obtained by SEM-EDX will be described. In a graph in FIG. 3, the axis of abscissas represents the distance ($\mu$m) in the depth direction from the front surface side, and the axis of ordinates represents the X-ray intensity of Ni and Fe. It is indicated in the graph in FIG. 3 that, in a shallow part toward the thickness direction, nickel content is large and iron content is small. On the other hand, the iron content gradually increases in going forward in the thickness direction.

At parts in front of and behind an intersection of the curve of nickel and the curve of iron, in the present embodiment, the distance between 2/10 times the maximum of nickel and 2/10 times the maximum of iron is deemed as the thickness of the iron-nickel alloy layer 30, and the thickness can be read from the graph.

Note that, also in the cases where a metallic layer 40 or a roughened nickel layer 50 which will be described later is formed on the iron-nickel alloy layer 30, the thickness of the iron-nickel alloy layer 30 can be obtained by the above-described method.

Note that the reason why the distance between 2/10 times the maximum of nickel and 2/10 times the maximum of iron is deemed as the thickness of the iron-nickel alloy layer 30 in the present embodiment is as follows.

While it is preferable in the present invention that the thickness of the iron-nickel alloy layer 30 be not less than a predetermined value, in the case where the thickness of the iron-nickel alloy layer 30 is measured by SEM-EDX, it was found out that, even in a sample not having been subjected to a heat treatment, that is, even in a sample in which diffusion of iron is absent in nickel, the iron intensity at a position where the nickel intensity becomes a peak is detected in a numerical value on the order of 10% to 20% based on the nickel intensity. In addition, after the nickel intensity is attenuated, that is, in measurement of a part of the metallic base material 20, the nickel intensity kept being detected to have a numerical value on the order of 3% to 8% of the maximum nickel intensity. The nickel intensity in this instance is on the order of 2% based on the iron intensity, and the nickel intensity was not reduced to below 1% even when measurement was continued for not less than 2 um after the attenuation. In other words, in the measurement by SEM-EDX, it was found that the nickel intensity and the iron intensity were mutually influenced in a tiny amount range. In view of this, herein, as a thickness of an alloy layer at which the alloy is more securely realized and the hydrogen barrier properties can be secured, a range where the intensity of not less than 2/10 times each maximum intensity is detected was defined.

In the surface treated steel foil 10 for the current collector in the present embodiment, it is preferable, in terms of hydrogen barrier properties, liquid electrolyte resistance, and the like suitable for a bipolar electrode, that the deposition amount of nickel in the iron-nickel alloy layer 30 be 0.80 to 53.4 g/m$^2$, more preferably 0.80 to 26.7 g/m$^2$. Note that the deposition amount of nickel in the iron-nickel alloy layer 30 can be measured by X-ray fluorescence analysis (XRF) or the like.

In the iron-nickel alloy layer 30 in the present embodiment, it is preferable, in terms of hydrogen barrier properties, that the crystallite size on a (200) plane of the iron-nickel alloy be not less than 3 nm, more preferably not less than 8 nm. Though an upper limit is not particularly present, the crystallite size is normally not more than 50 nm. In the case where hydrogen permeates through the iron-nickel alloy layer, along which route the hydrogen moves is not clear, but it is considered that grain boundaries and interfaces with large misorientation are parts through which hydrogen permeates easily. Hence, in the case of a configuration in which the crystallite size is small and grain boundaries are liable to be present in a large number, it is considered that there are many routes for passage of hydrogen, the total amount of permeation amount of hydrogen is liable to increase, and hydrogen barrier properties are liable to be worsened. On the other hand, in the case where the crystallite size is large, it is considered that there are few grain boundaries and few interfaces with large misorientation, and permeation of hydrogen occurs with difficulty. Particularly, in the case where the iron-nickel alloy layer is formed by iron-nickel alloy plating, there is a tendency toward finer grains and a smaller crystallite size; in this case, by performing a heat treatment after the alloy plating, the crystallite size can be made to be not less than 8 nm, and hydrogen barrier properties can be obtained more effectively. In the case where the crystallite size exceeds 50 nm, it is supposed that the diffusion of Fe from the iron in the base material to the outermost surface has been caused to proceed conspicuously by the heat treatment, so that the Fe composition at the surface of the iron-nickel alloy layer 30 is liable to be high, and elution of Fe is liable to be caused, which is unfavorable.

The reason why it is preferable to define the crystallite size on the (200) plane of the iron-nickel alloy in the iron-nickel alloy layer 30 in the present embodiment as described above is that the iron-nickel alloy has a face-centered cubic structure, that the (200) plane is liable to obtain strength, that the crystallite size of iron-nickel can be measured more accurately, and that the (200) plane is a plane suitable for control.

The crystallite size on the (200) plane of the iron-nickel alloy in the iron-nickel alloy layer 30 in the present embodiment can be determined from a peak half value width by X-ray diffraction by use of the following formula. Measurement of X-ray diffraction is carried out, for example, by use of a known X-ray diffraction apparatus. For calculation of the crystallite size, a peak on the (200) plane of the iron-nickel alloy appearing around $2\theta = 51°$ is used.

$$D = K \times \lambda / (\beta \times \cos\theta)$$

D: crystallite size

K: Scherrer constant (K = 0.94 is used)
λ: wavelength of X-ray used
β: half value width of diffraction X-ray of crystallite
θ: Bragg angle

Next, the thickness of the whole part of the surface treated steel foil 10 for the current collector in the present embodiment will be described. Note that, as the "thickness of the surface treated steel foil 10 for the current collector" in the present embodiment, thickness measurement by observation of a section under a SEM or thickness measurement by a micrometer is also applicable.

The thickness of the whole part of the surface treated steel foil 10 for the current collector in the present embodiment, in the case where the steel foil does not have the roughened nickel layer 50 which will be described later, is preferably in the range of 0.01 to 0.5 mm. In addition, in terms of strength, desired battery capacity, and the like, the thickness is more preferably 0.01 to 0.3 mm, and further preferably 0.025 to 0.1 mm.

On the other hand, the thickness of the whole part of the surface treated steel foil 10 for the current collector in the present embodiment, in the case where the steel foil has the roughened nickel layer 50 which will be described later at the outermost surface, is preferably in the range of 0.02 to 0.51 mm. Besides, in terms of strength, desired battery capacity, and the like, the thickness is more preferably 0.02 to 0.31 mm, and further preferably 0.035 to 0.11 mm.

In the case where the thickness exceeds the upper limit of the above-mentioned thickness range, the thickness is unfavorable in terms of a volume and weight energy density of the battery to be manufactured, and is unfavorable particularly in the case where thinning of the battery is intended. On the other hand, in the case where the thickness is less than the lower limit of the above-mentioned thickness range, not only does it become difficult to realize a strength sufficient against the influence of charging and discharging of the battery, but there is also a high possibility of generation of breakage, rupture, wrinkling, or the like during manufacture, handling, and the like of the battery.

The surface treated steel foil 10 for the current collector in the present embodiment may further have the metallic layer 40 formed on the above-mentioned iron-nickel alloy layer 30, as depicted in FIG. 4. Examples of the metallic material constituting the metallic layer 40 include nickel, chromium, titanium, copper, cobalt, and alloys containing these metals. Of these kinds of metal and alloys, nickel and nickel alloys are particularly preferable for the reason of being excellent in liquid electrolyte resistance and strength. Note that a layer obtained by forming a nickel layer on the iron-nickel alloy layer by preventing iron from diffusing to the surface in forming the iron-nickel alloy layer 30 by performing a heat treatment after nickel electroplating may be included in the metallic layer 40. In addition, nickel plating may be carried out further on such a metallic layer 40.

In other words, in the surface treated steel foil 10 for the current collector in the present embodiment, effects of formation of the metallic layer 40 on the iron-nickel alloy layer 30 are as follows. By forming the metallic layer 40 in addition to the iron-nickel alloy layer 30, conductivity, liquid electrolyte resistance, strength, and the like of the surface treated steel foil 10 for the current collector as a whole can be adjusted, and the surface treated steel foil for the current collector can be manufactured as a current collector material having desired properties.

In the case where the metallic layer 40 is a nickel layer in the surface treated steel foil 10 for the current collector in the present embodiment, it is preferable, in terms of hydrogen barrier properties suitable for a bipolar electrode, liquid electrolyte resistance, and the like, that the total of the nickel deposition amounts in the iron-nickel alloy layer 30 and the metallic layer 40 (nickel layer) be 2.0 to 53.4 $g/m^2$, more preferably 2.0 to 26.7 $g/m^2$. Note that the nickel deposition amounts in the iron-nickel alloy layer 30 and the metallic layer 40 can be measured by X-ray fluorescence analysis (XRF) or the like.

Note that the thickness of the metallic layer 40 is preferably 0.1 to 4.0 um, more preferably 0.1 to 3.5 um, further preferably 0.1 to 3.0 um, and particularly preferably 0.2 to 2.5 um. In addition, as for the thickness ratio of the iron-nickel alloy layer 30 and the metallic layer 40 in the surface treated steel foil 10 for the current collector, particularly in the case where the metallic layer 40 is a nickel layer, it is preferable, in terms of enhancing the liquid electrolyte resistance while more enhancing the hydrogen barrier properties, that the iron-nickel alloy layer 30: the metallic layer 40 = 3:10 to 60:1, and more preferably the iron-nickel alloy layer 30: the metallic layer 40 = 3:4 to 35:1.

As for a measuring method for the thickness of the metallic layer 40, also, as in the case of the iron-nickel alloy layer 30, thickness measurement by SEM-EDX of a section of the surface treated steel foil for the current collector is applicable.

In the surface treated steel foil 10 for the current collector in the present embodiment, the roughened nickel layer 50 may be formed at the outermost surface as depicted in FIG. 5. Note that the roughened nickel layer may be formed on the above-mentioned metallic layer 40 as depicted in FIG. 6.

The roughened nickel layer 50 may be formed on the side of the second surface 10b of the surface treated steel foil 10 for the current collector as depicted in FIG. 5(a), may be formed on the side of the first surface 10a as depicted in FIG. 5(b), or may be formed on both sides. Note that, since the roughened nickel layer is described, for example, in the present inventors' application (WO2021/020338 and the like), the details thereof are omitted here, but it is preferable, in terms of enhancing adhesion with an active material, that a three-dimensional surface property parameter Sa of the roughened nickel layer be 0.2 to 1.3 um, more preferably 0.36 to 1.2 $\mu$m.

Note that, in forming the roughened nickel layer 50, from a viewpoint of adhesion between the roughened nickel layer 50 and an underlying layer, a ground nickel layer may be formed prior to roughened nickel plating, further the roughened nickel plating may be performed, and thereafter coating nickel plating may be conducted to form the roughened nickel layer. In other words, nickel plating formed as the metallic layer 40 on the iron-nickel alloy layer may be regarded as the ground nickel layer, and the roughened nickel layer 50 may be formed thereon. In addition, a metallic layer 40 obtained by a heat treatment in forming the iron-nickel alloy layer so performed as to leave a nickel layer in which iron is little diffused on the iron-nickel alloy layer and further performing nickel plating thereon may be regarded as the ground nickel layer, and the roughened nickel layer 50 may be formed thereon. Besides, the description of the above-mentioned metallic layer 40 or the "roughened nickel layer 50" herein may include a coating nickel layer. Note that the details of the ground nickel layer, the roughened nickel layer, and the coating nickel layer will be described later.

In the case where the roughened nickel layer 50 is formed, the total of the nickel deposition amounts in the iron-nickel alloy layer 30 and the roughened nickel layer 50 is preferably 7.7 to 106 g/m$^2$, more preferably 9 to 70 g/m$^2$, and further preferably 15 to 60 g/m$^2$.

In the case where the roughened nickel layer 50 is formed and where the roughened nickel layer 50 is formed on the metallic layer 40 composed of nickel, the total of the nickel deposition amounts in the iron-nickel alloy layer 30, the metallic layer 40, and the roughened nickel layer 50 is preferably 7.7 to 106 g/m$^2$, more preferably 9 to 70 g/m$^2$, and further preferably 15 to 60 g/m$^2$.

Note that, as the method for measuring the nickel deposition amount in the roughened nickel layer 50, the methods described in WO2020/017655, WO2020/020338, and the like can appropriately be adopted. In other words, the nickel deposition amount can be determined by measuring the total nickel amount in the surface treated steel foil 10 for the current collector by use of X-ray fluorescence analysis (XRF) or the like.

«Manufacturing method for surface treated steel foil for current collector»

A manufacturing method for the surface treated steel foil 10 for the current collector in the present embodiment will be described. The manufacturing method for the surface treated steel foil 10 for the current collector in the present embodiment has a step of forming an iron-nickel alloy layer 30 that restrains permeation or diffusion of hydrogen in the surface treated steel foil for the current collector, on at least one surface side of the side of a first surface 10a where a hydrogen occluding alloy is disposed and the side of a second surface 10b on the side opposite to the first surface 10a.

In the present embodiment, after a nickel plating layer is formed by electroplating on at least one surface of a steel foil as a metallic base material 20, a heat treatment is carried out to form an iron-nickel alloy layer 30 through thermal diffusion.

In addition, the iron-nickel alloy layer 30 may be formed by electroplating using a plating bath containing iron ions and nickel ions on at least one surface of the steel foil as the metallic base material 20.

In other words, as steps for forming the iron-nickel alloy layer 30, there may be mentioned (i-1) a step of forming a nickel plating layer on at least one surface of a steel foil, and (i-2) a step of forming the iron-nickel alloy layer 30 through thermal diffusion by performing a heat treatment of the nickel plating layer formed on the steel foil.

Alternatively, a step of forming the iron-nickel alloy layer 30 by using a plating bath containing iron ions and nickel ions on at least one surface of the steel foil may also be mentioned.

In the manufacturing method in the present embodiment, as the plating conditions and the like at the time of forming the nickel plating layer and forming the iron-nickel alloy plating layer by electroplating, known conditions are applicable. An example of the plating conditions will be indicated below.

[Nickel plating bath (Watts bath) and example of plating conditions]

· Bath composition:

Nickel sulfate hexahydrate: 200 to 300 g/L
Nickel chloride hexahydrate: 20 to 60 g/L
Boric acid: 10 to 50 g/L
Bath temperature: 40°C to 70°C
pH: 3.0 to 5.0

Stirring: air stirring or jet stirring
Current density: 5 to 30 A/dm$^2$

Note that, in regard of the bath composition, not only the Watts bath, but also a known nickel sulfamate bath or a citric acid bath may be used. Further, additives such as a known brightening agent may be added to the plating bath, to perform bright nickel plating or semi-bright nickel plating.

[Iron-nickel alloy plating bath and example of plating conditions]

· Bath composition

Nickel sulfate hexahydrate: 150 to 250 g/L
Iron sulfate heptahydrate: 5 to 100 g/L
Nickel chloride hexahydrate: 20 to 50 g/L
Boric acid: 20 to 50 g/L
Sodium citrate (or trisodium citrate): 1 to 15 g/L
Sodium saccharin: 1 to 10 g/L

· Temperature: 25°C to 70°C
· pH: 2 to 4
· Stirring: air stirring or jet stirring
· Current density: 5 to 40 A/dm$^2$

Note that, in regard of the above-mentioned bath temperature, in the case where the bath temperature is less than 25°C, electrodeposition efficiency is lowered, or precipitation occurs with difficulty, so that it is difficult to form the desired alloy layer, which is unfavorable. In addition, it may be impossible to precipitate the layer, which is unfavorable. On the other hand, in the case where the bath temperature exceeds 70°C, also, the plating film becomes hard, or the possibility of generation of defects such as cracks becomes high, which is unfavorable. Besides, it becomes difficult to control the composition of iron (Fe) and nickel (Ni), which is unfavorable.

In the case where pH is less than 2, precipitation of nickel (Ni) occurs with difficulty, and it becomes impossible to control the desired composition of iron (Fe) and nickel (Ni), which is unfavorable. In addition, plating precipitation efficiency is lowered, which is unfavorable. On the other hand, if pH exceeds 4, precipitation of iron (Fe) occurs with difficulty, and it becomes impossible to control the desired composition of iron (Fe) and nickel (Ni), which is unfavorable. In addition, sludge may be engulfed into the iron-nickel alloy layer obtained, which is unfavorable.

In regard of the current density, in the case where the current density is less than 5 A/dm$^2$, stress on a coating film becomes too high, so that defects such as cracks in the plating film are liable to be generated, which is unfavorable. In addition, production efficiency may be lowered, which is unfavorable. In the case where the current density exceeds 40 A/dm$^2$, plating burning may be generated, which is unfavorable.

Besides, an anti-pitting agent may be added in an appropriate amount.

In the manufacturing method in the present embodiment, the deposition amount of nickel in the nickel plating layer or the iron-nickel alloy plating layer formed on the steel foil is preferably 0.80 to 53.4 g/m$^2$ per one surface. In the case where the deposition amount exceeds 53.4 g/m$^2$, operability of electroplating is lowered, so that cost is largely increased. On the other hand, in the case where the deposition amount is less than 0.80 g/m$^2$, it may be impossible to obtain sufficient liquid electrolyte resistance, which is unfavorable. From the viewpoints of cost and liquid electrolyte resistance, it is more preferable that the nickel deposition amount on the steel foil after alloy plating or after the heat treatment which will be described later be 0.80 to 26.7 g/m$^2$ per one surface, and the total deposition amount on both surfaces is further preferably 1.6 to 53.5 g/m$^2$.

Next, conditions for the heat treatment in the above-mentioned (i-2) step will be described. As the conditions for the heat treatment step in the present embodiment, the following conditions may be mentioned. Note that the heat treatment in the present embodiment may be continuous annealing or may be batch annealing (box annealing). In addition, the heat treatment conducted not after the nickel plating but after the iron-nickel alloy plating may also be conducted under similar conditions, and by performing a heat treatment after the iron-nickel alloy plating, the crystallite size can be set within a preferable range.

As an example of temperature and time in the case of the continuous annealing treatment, the annealing is preferably carried out at a temperature of 650°C to 950°C for a soaking time of 15 to 150 seconds. In the case of a lower temperature or a shorter time, a sufficient iron-nickel alloy layer 30 may not be obtained successfully, which is unfavorable.

On the other hand, in the case of a higher temperature or a longer time than the above-mentioned heat treatment ranges, variations in mechanical properties of the steel foil as the base material or the like are large, and strength is conspicuously lowered, which is unfavorable, or it is unfavorable in terms of cost.

As an example of temperature and time in the case of the batch annealing (box annealing), the annealing is preferably carried out at a temperature of 450°C to 690°C for a soaking time of 1.5 to 20 hours, and a total time of temperature rise, soaking, and cooling of 4 to 80 hours. In the case of a lower temperature or a shorter time than this, it may be impossible to obtain a sufficient iron-nickel alloy layer, which is unfavorable. On the other hand, in the case of a higher temperature or a longer time than the above-mentioned heat treatment ranges, variations in the mechanical properties of the steel foil as the base material or the like are large, and strength might be conspicuously lowered, which is unfavorable, or such a higher temperature or a longer time is unfavorable in terms of cost.

Note that, in the manufacturing method of the surface treated steel foil 10 for the current collector in the present embodiment, in the case of forming a nickel layer as the metallic layer further on the iron-nickel alloy layer 30, the nickel layer can be formed by a known nickel bath such as the above-mentioned Watts bath, a nickel sulfamate bath, or a citric acid bath. In this case, it is preferable to carry out a known strike nickel plating treatment immediately before forming the nickel layer.

Note that it is preferable, in terms of adhesion with the roughened nickel layer which will be described later, that a heat treatment not be conducted after the formation of the metallic layer by use of the nickel plating.

In addition, in the manufacturing method for the surface treated steel foil 10 for the current collector in the present embodiment, the roughened nickel layer 50 can be formed at the outermost surface. Note that a plating bath for forming the roughened nickel layer has a chloride ion concentration of preferably 3 to 90 g/L, more preferably 3 to 75 g/L, and further preferably 3 to 50 g/L, a ratio between nickel ions and ammonium ions in terms of weight ratio of "nickel ions/ammonium ions" of preferably 0.05 to 0.75, more preferably 0.05 to 0.60, further preferably 0.05 to 0.50, and still further preferably 0.05 to 0.30, and a bath conductivity at 50°C of preferably 5.00 to 30.00 S/m, more preferably 5.00 to 20.00 S/m, and further preferably 7.00 to 20.00 S/m. Note that, in the case where the chloride ion concentration is not less than 10 g/L, a favorable roughened plating state can easily be realized even if the deposition amount in the roughened nickel plating is somewhat small. The method for adjusting the chloride ion concentration, the ratio between nickel ions and ammonium ions, and bath conductivity of the plating bath within the above-mentioned ranges is not particularly limited to any method; for example, there may be mentioned a method in which the plating bath contains nickel sulfate hexahydrate, nickel chloride hexahydrate, and ammonium sulfate, and the blending amounts of these compounds are appropriately adjusted.

An example of plating conditions is as follows.

«Example of roughened nickel plating conditions»

Bath composition

Nickel sulfate hexahydrate 10 to 100 g/L, Nickel chloride hexahydrate 1 to 90 g/L, ammonium sulfate 10 to 130 g/L

pH 4.0 to 8.0
Bath temperature 25°C to 70°C
Current density 4 to 40 A/dm$^2$
Plating time 10 to 150 seconds
Presence/absence of stirring: Air stirring or jet stirring

Note that the addition of ammonia to the nickel plating bath may be conducted by use of ammonia water, ammonium chloride, or the like in place of ammonium sulfate. The ammonia concentration in the plating bath is preferably 6 to 35 g/L, more preferably 10 to 35 g/L, further preferably 16 to 35 g/L, and still further preferably 20 to 35 g/L. Besides, in order to control the chloride ion concentration, use may be made of a basic nickel carbonate compound, hydrochloric acid, sodium chloride, potassium chloride, or the like.

Note that, as disclosed in WO2020/017655, as a post-stage of roughened nickel plating, coating nickel plating may be performed to form the roughened nickel layer. Note that the contents of disclosure in WO2020/017655 are applicable to the coating nickel plating conditions, and hence, description of details is omitted here.

The three-dimensional surface property parameter Sa of the roughened nickel layer 50 is preferably 0.2 to 1.3 um as described above. To set the numerical value of the three-dimensional surface property parameter Sa of the roughened nickel layer 50 within this range, for example, control of surface roughness of the metallic base material 20, adjustment of the roughened nickel plating conditions and the thickness, adjustment of the ground nickel plating conditions and the thickness, adjustment of the coating nickel plating conditions and the thickness, and the like may be adopted.

«Examples»

The present invention will be described more specifically below by using Examples. First, measuring methods in Examples will be described.

[Measuring method for thickness of iron-nickel alloy layer after heat treatment]

Calculation of the thickness of the iron-nickel alloy layer was conducted by an analysis by SEM-EDX (device name SU8020 made by Hitachi High-Tech Corporation and EDAX made by AMETEK, Inc.), specifically by linear analysis of elemental analysis of Ni and Fe at a depth down to 15 um in the depth direction from a surface layer. Note that measurement conditions were an accelerating voltage of 15 kV, an observation magnification of 5,000, and a measurement step of 0.1 um. As depicted in FIG. 3, the axis of abscissas represents the distance ($\mu$m) in the depth direction from the surface layer, the axis of ordinates represents X-ray intensity of Ni and Fe, and at parts around an intersection between a curve of nickel and a curve of iron, the distance between 2/10 times the maximum of nickel and 2/10 times the maximum of iron was deemed as the thickness of the iron-nickel alloy layer 30, and the thickness was read from the graph.

[Hydrogen permeation current density measuring method]

By use of the device depicted in FIG. 2, measurement was conducted using an evaluation sample as a working electrode and using Ag/AgCl as a reference electrode under the conditions of a potential on the hydrogen generation side (cathode side) of -1.5 V and a potential on the hydrogen detection side (anode side) of +0.4 V. Note that, as a detailed measuring method, measurement was conducted using the device depicted in FIG. 2(a) as described above. As a liquid electrolyte, use was made of an alkaline aqueous solution at 65°C, containing 6 mol/L of KOH as a main constituent and containing KOH, NaOH, and LiOH with a total concentration of KOH, NaOH, and LiOH of 7 mol/L. As potentiostat, a "multi-electrochemical measurement system HZ-Pro" made by HOKUTO DENKO CORPORATION was used. First, a potential of +0.4 V was applied on the hydrogen detection side and was maintained for 60 minutes for stabilization of current value. Note that the hydrogen detection side was continuedly maintained at the same potential. Next, a potential was applied stepwise on the hydrogen invasion side as -0.7 V, -1.1 V, and -1.5 V, each of the potentials being applied for 15 minutes. Note that variation in oxidation current while the potential on the hydrogen invasion side was -1.5 V was regarded as a hydrogen permeation current density, which was an evaluation object in Examples and Comparative Examples. The measurement diameter was $\varphi$20 mm, and the measurement area was 3.14 cm$^2$.
The hydrogen permeation current density I ($\mu$A/cm$^2$) obtained from the following formula (1) was set forth in Table 1.

$$\text{Hydrogen permeation current density I } (\mu A/cm^2) =$$

$$((\text{average value of oxidation current from Ib to Ic})/S) -$$

$$((\text{average of Ia and Id})/S) \quad \cdots \quad (1)$$

where Ia ($\mu$A) is oxidation current at five seconds before application of -1.5 V, Ib ($\mu$A) is oxidation current at 155 seconds after the start of application of -1.5 V, Ic ($\mu$A) is oxidation current at end of application of -1.5 V, Id (uA) is oxidation current at 155 seconds after the end of application of -1.5 V, and S (cm$^2$) is the measurement area (evaluation area).

[Measurement of crystallite size]

For measurement of crystallite size, X-ray diffraction was conducted using an X-ray diffraction device (full-automatic multi-purpose horizontal X-ray diffraction device SmartLab, made by Rigaku Corporation).

<Device configuration>

·X-ray source: CuK$\alpha$
·Goniometer radius: 300 nm
·Optical system: concentration method

(Incidence side slit system)

·Solar slit: 5°
·Longitudinal limit slit: 5 mm
·Divergence slit: 2/3°

(light reception side slit system)

·Scattering slit: 2/3°
·Solar slit: 5°
·Light reception slit: 0.3 mm
·Monochromating processing method: counter monochrometer method
·Detector: scintillation counter

<Measurement parameters>

·Tube voltage-tube current: 45 kV 200 mA
·Scanning axis: 2θ/θ (concentration method)
·Scanning mode: continuous
·Measurement range: 2θ 40 to 100°
·Scanning rate: 10°/min
·Step: 0.02°

A sample was placed on a measurement specimen support, and in the iron-nickel alloy layer, X-ray diffraction measurement of an X-ray diffraction angle range of 2θ = 40 to 100° was conducted by a reflection method. Thereafter, from the thus obtained measurements, the crystallite size was calculated based on the following formula by use of an integrated powder X-ray analysis software PDXL made by Rigaku Corporation.

Specifically, in the obtained measurement chart, a half value width of a 51.05° peak derived from the (200) plane of the iron-nickel alloy was calculated, to obtain crystallite size on the (200) plane of the iron-nickel alloy. Note that, in the case where a peak is present around 51.85° derived from a (200) plane of nickel, peak separation can be performed. In addition, in the case where data processing is conducted by use of the above-mentioned X-ray analysis software, by performing a peak optimization treatment while fixing only angles at 2θ(FeNi(200)) = 51.05° and 2θ (Ni(200)) = 51.85° in the range of X-ray diffraction angle 2θ = 48 to 54°, and making other settings automatic setting, peak separation of each component and calculation of the crystallite size can be carried out. Note that, in the conditions for the optimization treatment, the peak shape can be made to be divided-type quasi-Voigt function.

$$D = K \times \lambda / (\beta \times \cos\theta)$$

D: crystallite size
K: Scherrer constant (K = 0.94 is used)
λ: wavelength of X-ray used
β: half value width of diffraction X-ray of crystallite
θ: Bragg angle

<Example 1>

First, as the metallic base material 20, a cold rolled foil (50 um in thickness) of a low carbon aluminum-killed steel having the following composition was prepared.
C: 0.04 wt%, Mn: 0.32 wt%, Si: 0.01 wt%, P: 0.012 wt%, S: 0.014 wt%, the balance: Fe and unavoidable impurities

Next, the prepared metallic base material was subjected to electrolytic degreasing and pickling by immersion in sulfuric acid, after which nickel plating was conducted on both surfaces of the steel foil under the following conditions, to form nickel plating layers having a target thickness of 0.5 um and a nickel deposition amount of 4.45 g/m$^2$. Note that the conditions for the nickel plating were as follows.

(Conditions of Ni plating)

Bath composition:

Nickel sulfate hexahydrate: 250 g/L
Nickel chloride hexahydrate: 45 g/L
Boric acid: 30 g/L
Bath temperature: 60°C
pH: 4.0 to 5.0
Stirring: air stirring or jet stirring
Current density: 10 A/dm$^2$

Note that the nickel deposition amount was measured by use of an X-ray fluorescence device (device name: ZSX100e, made by Rigaku Corporation), and the obtained numerical value is set forth in Table 1. Note that a specific measuring method is similar to the method described in WO2020/017655, and hence, detailed description thereof is omitted here.

Next, the steel foil having the nickel plating layers formed as above was subjected to a heat treatment by box annealing under the conditions of a heat treatment temperature of 640°C, a soaking time of two hours (a total of temperature rise time, soaking time, and cooling time: six hours), and in a reducing atmosphere. By this heat treatment, a surface treated steel foil having iron-nickel alloy layers on both surface sides with a thickness of the iron-nickel alloy layer on one surface side of 1.4 $\mu$m. (a total thickness of the iron-nickel alloy layers on both surface sides: 2.8 um) was obtained.

The thus obtained surface treated steel foil was subjected to formation of measurement nickel films on both surface sides. Thereafter, the hydrogen permeation current density was measured. Note that the "measurement nickel films" are films provided for the purpose of avoiding influences of differences in surface state between Examples and Comparative Examples on measurement conditions and measurements (oxidation current) and were formed under the following plating conditions.

The obtained results are set forth in Table 1.

<Measurement nickel plating conditions>

Bath composition: nickel sulfate hexahydrate 250 g/L, nickel chloride hexahydrate 45 g/L, boric acid 30 g/L

pH 4.0 to 5.0
Bath temperature 60°C
Current density 10A/dm$^2$

The target thickness of the measurement nickel layer was 1.0 um on each surface side.

<Example 2>

A process similar to that in Example 1 was conducted, except that the target thickness of the nickel plating layer to be formed on the steel foil was 1.5 um. The results are set forth in Table 1.

<Example 3>

A process similar to that in Example 1 was conducted, except that the target thickness of the nickel plating layer to be formed on the steel foil was 3.0 um. The results are set forth in Table 1.

<Example 4>

A process similar to that in Example 1 was conducted, except that the target thickness of the nickel plating layer to be formed on the steel foil was 1.0 um. The results are set forth in Table 1.

In addition, before and after the formation of the measurement nickel film, the crystallite size on the (200) plane of the iron-nickel alloy layer was obtained, and the crystallite size was found to be 12 nm before the formation of the measurement nickel film and be 10.9 nm after the formation of the measurement nickel film.

<Example 5>

A process similar to that in Example 1 was conducted, except that the target thickness of the nickel plating layer to be formed on the steel foil was 1.5 um, and the heat treatment conditions of box annealing were a heat treatment temperature of 560°C and a soaking time of six hours (a total of temperature rise time, soaking time, and cooling time: 10 hours). The results are set forth in Table 1.

<Example 6>

A process similar to that in Example 5 was conducted, except that the target thickness of the nickel plating layer to be formed on the steel foil was 2.0 um. The results are set forth in Table 1.

<Example 7>

A process similar to that in Example 5 was conducted, except that the target thickness of the nickel plating layer to be formed on the steel foil was 0.5 um. The results are set forth in Table 1.

<Example 8>

A process similar to that in Example 5 was conducted, except that the target thickness of the nickel plating layer to be formed on the steel foil was 1.0 um. The results are set forth in Table 1.

<Example 9>

A process similar to that in Example 5 was conducted, except that the target thickness of the nickel plating layer to be formed on the steel foil was 3.0 um. The results are set forth in Table 1.

<Example 10>

A process similar to that in Example 1 was conducted, except that the target thickness of the nickel plating layer to be formed on the steel foil was 3.0 um, and the heat treatment was conducted by continuous annealing with a reached temperature of 900°C and a soaking time of 120 seconds.

<Example 11>

A process similar to that in Example 1 was conducted, except that the target thickness of the nickel plating layer to be formed on the steel foil was 0.7 um, and the heat treatment was conducted by continuous annealing with a reached temperature of 900°C and a soaking time of 120 seconds.

<Example 12>

A process similar to that in Example 1 was conducted, except that the target thickness of the nickel plating layer to be formed on the steel foil was 0.7 um, and the heat treatment was conducted by continuous annealing with a reached temperature of 900°C and a soaking time of 30 seconds.

<Example 13>

A process similar to that in Example 1 was conducted, except that the target thickness of the nickel plating layer to be formed on the steel foil was 1.0 um, and the heat treatment was conducted by continuous annealing with a reached temperature of 900°C and a soaking time of 20 seconds.

<Example 14>

The metallic base material was subjected to iron-nickel alloy plating under the following conditions, to obtain a surface treated steel foil provided on both surface sides thereof with iron-nickel alloy layers having a target thickness of 5.0 um.

(Iron-nickel alloy plating conditions)

·Bath composition

Nickel sulfate hexahydrate: 200 g/L
Iron sulfate heptahydrate: 50 g/L
Nickel chloride hexahydrate: 45 g/L
Boric acid: 30 g/L
Trisodium citrate: 10 g/L
Sodium saccharin: 5 g/L
Anti-pitting agent: 1 ml/L

·Temperature: 60°C
·pH: 2.5 to 3.0
·Stirring: air stirring
·Current density: 15 A/dm$^2$

The heat treatment after the plating was not conducted. A process similar to Example 1 was conducted, except for these factors. The results are set forth in Table 1.

In addition, after the formation of the measurement nickel film, the crystallite size on the (200) plane of the iron-nickel alloy layer was obtained to be 5.3 nm.

<Example 15>

The metallic base material was subjected to iron-nickel alloy plating under the conditions same as those in Example 14, to obtain a surface treated steel foil provided on both surface sides thereof with iron-nickel alloy layers having a target thickness of 1.0 um. The heat treatment after the plating was not conducted. A process similar to that in Example 1 was conducted, except for these factors. The results are set forth in Table 1.

In addition, before and after the formation of the measurement nickel film, the crystallite size on the (200) plane of the iron-nickel alloy layer was obtained. The crystallite size was found to be 5.0 nm before the formation of the measurement nickel film and be 5.3 nm after the formation of the measurement nickel film.

<Example 16>

The metallic base material was subjected to iron-nickel alloy plating under the conditions same as those in Example 14, to obtain a surface treated steel foil provided on both surface sides thereof with iron-nickel alloy layers having a target thickness of 1.0 um. A heat treatment after the plating was conducted by continuous annealing with a reached temperature of 900°C and a soaking time of 120 seconds. A process similar to that in Example 1 was conducted except for these factors. The results are set forth in Table 1.

In addition, before the formation of the measurement nickel film, the crystallite size on the (200) plane of the iron-nickel alloy layer was obtained to be 11.7 nm.

<Example 17>

A process similar to that in Example 5 was conducted, except that the target thickness of the nickel plating layer to be formed on the steel foil was 0.25 um on one surface side and 0.1 um on the other surface side. With use of the surface where the target thickness of the nickel plating layer was 0.1 um, as a detection surface, the hydrogen permeation current density was measured. The results are set forth in Table 2.

<Example 18>

After the heat treatment by continuous annealing in Example 14 was conducted, formation of the measurement nickel film was not performed, and "a ground nickel layer and a roughened nickel layer" were formed on the iron-nickel alloy layer on one surface side under the following conditions, whereas only the ground nickel layer was formed on the iron-nickel alloy layer on the opposite surface side. Note that the roughened nickel layer was formed by roughened nickel plating and coating nickel plating.

<Ground nickel plating conditions>

Bath composition: nickel sulfate hexahydrate 250 g/L, nickel chloride hexahydrate 45 g/L, boric acid 30 g/L

pH 4.0 to 5.0
Bath temperature 60°C
Current density 10 A/dm$^2$

The target thickness of the ground nickel layer was as set forth in Table 3.

<Roughened nickel plating conditions>

Concentration of nickel sulfate hexahydrate in plating bath: 10 g/L
Concentration of nickel chloride hexahydrate in plating bath: 10 g/L
Concentration of chloride ions in plating bath: 3 g/L
Ratio between nickel ions and ammonium ions in plating bath: nickel ions/ammonium ions (weight ratio) = 0.17
pH: 6
Bath temperature: 50°C
Current density: 12 A/dm$^2$
Plating time: 80 seconds

<Coating nickel plating conditions>

Bath composition: nickel sulfate hexahydrate 250 g/L, nickel chloride hexahydrate 45 g/L, boric acid 30 g/L
pH: 4.0 to 5.0
Bath temperature: 60°C
Current density: 5 A/dm$^2$
Plating time: 36 seconds

In regard of the surface treated steel foil thus obtained, the total of the nickel deposition amounts in the iron-nickel alloy layer, the ground nickel layer, and the roughened nickel layer was 38.1 g/m$^2$. Measurement of the hydrogen permeation current density was conducted using the roughened nickel layer as a detection surface.

Note that, in the case where a roughened layer is formed on the test piece, there may be a case in which the measurement of the hydrogen permeation current density cannot be performed normally, due to leaching of the liquid electrolyte through gaps of roughening. Hence, in order to restrain the influence of the leaching of the liquid electrolyte through the gaps of roughening, prior to the setting of the measurement cells, a polypropylene resin in which a circle with a measurement diameter of φ20 mm was cut out was adhered to the surface where the roughened layer was formed, while being positioned to a measurement position, and the test piece was disposed between the measurement cells. The polypropylene resin used was a film having a thickness of 70 um, and it was adhered by thermocompression conducted by pressing under the conditions of 170°C and 0.1 to 0.4 MPa for three seconds.

In addition, the three-dimensional surface property parameter Sa of the outermost surface where the roughened nickel layer was formed of the surface treated steel foil was measured to be 0.6 um. The results are set forth in Table 3. The three-dimensional surface property parameter Sa was measured by use of a laser microscope (3D measurement laser microscope LEXT OLS5000, made by Olympus Corporation) under the condition of magnification of an objective lens of OLS5000 of 100.

<Example 19>

After the heat treatment in Example 1 was conducted, formation of the measurement nickel film was not conducted, and "a ground nickel layer and a roughened nickel layer" were formed on the iron-nickel alloy layer on one surface side under conditions similar to those in Example 18, whereas only the ground nickel layer was formed on the iron-nickel alloy layer on the opposite surface side. Note that the roughened nickel layer was formed by performing roughened nickel plating and coating nickel plating. In addition, the total value of the nickel deposition amounts was obtained, as in Example 18, and measurement of the hydrogen permeation current density and measurement of the three-dimensional surface property parameter Sa were conducted. The results are set forth in Table 3.

<Example 20>

A process similar to that in Example 1 was conducted, except that the thickness of the cold rolled foil as the metallic base material 20 was 60 um and that the target thickness of the nickel plating layer to be formed on the steel foil was modified, the conditions of a heat treatment in forming the iron-nickel alloy layer were a heat treatment temperature of 560°C and a soaking time of eight hours (a total of temperature rise time, soaking time, and cooling time: 80 hours), and cold rolling with a draft of 17.7% was conducted after the heat treatment. Note that measurement of the nickel deposition amount by the X-ray fluorescence device was conducted after the cold rolling. The results are set forth in Table 1.

<Comparative Example 1>

A process similar to that in Example 1 was conducted, except that the heat treatment of the steel foil having the nickel plating layers was not performed. The results are set forth in Table 1. Note that, although the iron-nickel alloy layer was not actually formed in Comparative Example 1 since the heat treatment was not conducted, in regard of measurement by SEM-EDX, the distance from iron 2/10 intensity to nickel 2/10 intensity was 0.3 um.

<Comparative Example 2>

A process similar to that in Comparative Example 1 was conducted, except that the thickness of the nickel plating layer was modified as set forth in Table 1. The results are set forth in Table 1.

<Comparative Example 3>

A process similar to that in Comparative Example 1 was conducted, except that the thickness of the nickel plating layer was modified as set forth in Table 1. The results are set forth in Table 1.

<Reference Example 1>

A nickel layer having a target thickness of 26.0 um and a nickel deposition amount of 231.4 g/m² was formed on a titanium base plate under nickel plating conditions similar to those in Example 1, and the nickel layer was peeled off, to produce an electrolytic nickel foil. A heat treatment was not conducted. The hydrogen permeation current density was measured as in Example 1 except for these factors. The results are set forth in Table 1.

<Reference Example 2>

Nickel plating with a target thickness of 50.0 um and a nickel deposition amount of 445.0 g/m² was conducted similarly to Reference Example 1, to produce an electrolytic nickel foil. The hydrogen permeation current density was measured as in Reference Example 1 except for these factors. The results are set forth in Table 1.

[Table 1]

| | Ni target thickness before heat treatment (μm) *1 | Ni deposition amount (g/m²) *1 | Heat treatment temperature (°C) | Alloy layer thickness (μm) *1 | Total of alloy layer thicknesses on both surface sides (μm) | Hydrogen permeation current density I (μA/cm²) |
|---|---|---|---|---|---|---|
| Example 1 | 0.5 | 4.5 | 640 | 1.4 | 2.8 | 0.00 |
| Example 2 | 1.5 | 13.4 | 640 | 1.9 | 3.8 | 1以下 |
| Example 3 | 3.0 | 26.7 | 640 | 2.3 | 4.6 | 0.00 |

(continued)

| | Ni target thickness before heat treatment ($\mu$m) *1 | Ni deposition amount (g/m$^2$) *1 | Heat treatment temperature (°C) | Alloy layer thickness ($\mu$m) *1 | Total of alloy layer thicknesses on both surface sides ($\mu$m) | Hydrogen permeation current density I ($\mu$A/cm$^2$) |
|---|---|---|---|---|---|---|
| Example 4 | 1.0 | 8.9 | 640 | 1.8 | 3.6 | 1.33 |
| Example 5 | 1.5 | 13.4 | 560 | 2.1 | 4.2 | 0.00 |
| Example 6 | 2.0 | 17.8 | 560 | 2.2 | 4.4 | 0.00 |
| Example 7 | 0.5 | 4.5 | 560 | 1.4 | 2.8 | 1.12 |
| Example 8 | 1.0 | 8.9 | 560 | 1.6 | 3.2 | 0.00 |
| Example 9 | 3.0 | 26.7 | 560 | 3.2 | 6.4 | 0.00 |
| Example 10 | 3.0 | 26.7 | 900 (continuous annealing) | 1.8 | 3.6 | 0.00 |
| Example 11 | 0.7 | 6.2 | 900 (continuous annealing) | 1.8 | 3.6 | 0.00 |
| Example 12 | 0.7 | 6.2 | 900 (continuous annealing) | 1.2 | 2.4 | 7.20 |
| Example 13 | 1.0 | 8.9 | 900 (continuous annealing) | 0.7 | 1.4 | 26.00 |
| Example 14 | 5.0 | 22.3 | No data | 5.7 | 11.4 | 16.79 |
| Example 15 | 1.0 | 4.5 | No data | 1.1 | 2.2 | 53.9 |
| Example 16 | 1.0 | 4.5 | 900 (continuous annealing) | 1.4 | 2.8 | 7.21 |
| Example 20 | 0.18 | 1.51 *2 | 560 | 0.9 | 1.8 | 4.5 |
| Comparative Example 1 | 0.5 | 4.5 | No data | No data | No data | 284.9 |
| Comparative Example 2 | 1.0 | 8.9 | No data | No data | No data | 273.6 |
| Comparative Example 3 | 5.0 | 44.5 | No data | No data | No data | 158.8 |
| Reference Example 1 | 26.0 | 231.4 | No data | 0 | 0 | 132.0 |
| Reference Example 2 | 50.0 | 445.0 | No data | 0 | 0 | 57.4 |
| *1···Numerical value per one surface side *2···Numerical value measured after cold rolling | | | | | | |

[Table 2]

|  | Ni target thickness before heat treatment (μm) | Ni deposition amount (g/m²) | Heat treatment temperature (°C) | Alloy layer thickness (μm) | Total of alloy layer thicknesses on both surface sides (μm) | Hydrogen permeation current density I (μA/cm²) |
|---|---|---|---|---|---|---|
| Example 17 | 0.25/0.1 | 2.2/0.9 | 560 | 0.7/0.3 | 1.0 | 2.85 |

[Table 3]

| | Ni target thickness before heat treatment (μm) *1 | Ni deposition amount (g/m²) *1 | Heat treatment temperature (°C) | Alloy layer thickness (μm) *1 | Total of alloy layer thicknesses on both surface sides (μm) | Ground Ni target thickness (μm) | Roughened Ni plating amount (g/m²) | Coating Ni plating amount (g/m²) | Total Ni deposition amount (g/m²) *1 | Sa (μm) | Hydrogen permeation current density I (μA/cm²) |
|---|---|---|---|---|---|---|---|---|---|---|---|
| Example 18 | 0.7 | 6.2 | 900 (continuous annealing) | 1.1 | 2.2 | 1.0 | 15.9 | 7.1 | 38.1 | 0.6 | 3.88 |
| Example 19 | 0.5 | 4.45 | 640 | 1.4 | 2.8 | 1.0 | 15.9 | 7.1 | 37.4 | 0.6 | 0 |

*1···Value per one surface side

It was confirmed that each of Examples has favorable hydrogen barrier properties. On the other hand, it was confirmed that Comparative Example 1, in which only the nickel layer was formed on the steel foil, cannot achieve the object in terms of hydrogen barrier properties.

In addition, in Comparative Examples 2 and 3, in the case where the thickness of the nickel layer was increased, it was confirmed that the hydrogen permeation current density tends to be reduced, but the reduction is not sufficient, and the object cannot be achieved in terms of hydrogen barrier properties.

In short, in each of Examples, the measurement nickel film having a thickness of 1 um is provided for unifying the surface state as confirmation of the effect of the alloy layer thickness, but it was found that the effect for hydrogen barrier properties is produced not by the effect of the nickel film but by the effect of the alloy layer. Hence, while the nickel film as plated on the surface is not indispensable to the actual form, from the viewpoint of hydrogen barrier properties, it was also found that, even when a nickel plating layer in a preferable thickness is formed as an upper layer of the alloy layer for another purpose, the nickel plating layer does not impede the hydrogen barrier properties.

Similarly, it was found that, in Example 18 and Example 19, even when a roughened nickel layer is formed, the roughened nickel layer does not impede the hydrogen barrier properties.

Further, it was found that, in Example 20, even when rolling of not more than 25% is conducted after the formation of the iron-nickel alloy layer, also, the hydrogen barrier properties are not impeded.

In addition, as confirmation of the effect of the crystallite size on the (200) plane of the iron-nickel alloy in the iron-nickel alloy layer, it was found that more favorable hydrogen barrier properties can be obtained in the case where the crystallite size is not less than 3 nm, preferably not less than 8 nm. Particularly, in Examples 15 and 16 in which the FeNi alloy layer was formed by the alloy plating, it was confirmed that, by performing a heat treatment after the alloy plating, it is possible to coarsen the crystallite size and to enhance hydrogen barrier properties more effectively.

In addition, under a strong alkali environment in measurement of the hydrogen permeation current density in the present embodiment and in a state in which a potential of +0.4 V is applied on the hydrogen detection side, a peak indicative of dissolution does not appear, and the oxidation current as the background is stable, so that it can be said that the present embodiment also has liquid electrolyte resistance. Note that, even in a state in which the measurement nickel film is absent, the tendency of the oxidation current as the background was similar to the above.

From the above-mentioned results, the surface treated steel foil of the present embodiment has favorable hydrogen barrier properties. In other words, it is considered that the surface treated steel foil is able to restrain a voltage drop caused by hydrogen permeation, that is, to restrain deterioration of battery performance.

The surface treated steel foil of the present embodiment is able to maintain favorable battery performance for a long period of time by restraining hydrogen permeation, is able to enhance battery performance after the lapse of time, and can suitably be used for a current collector of a secondary battery of the bipolar structure.

Note that the present embodiment and each of Examples may variously be modified within such a scope as not to depart from the gist of the present invention.

In addition, while the surface treated steel foil for the current collector in the above embodiment and Examples has been described to be used mainly for the current collector of the secondary battery of the bipolar structure, the application of the surface treated steel foil for the current collector of the present invention is not limited to the current collector of the secondary battery of the bipolar structure. The steel foil is applicable also to a current collector of a battery using a hydrogen occluding alloy and can suitably be used since it has hydrogen battier properties effective even in severe environments such as in-vehicle batteries.

[Industrial Applicability]

As has been described above, the surface treated steel foil for the current collector of the present invention is applicable to current collectors of various batteries required to have hydrogen barrier properties, and in the case where the surface treated steel foil for the current collector of the present invention is used for in-vehicle batteries or the like, it is possible to contribute especially to reduction of fuel cost.

[Reference Signs List]

10:     Surface treated steel foil for current collector
10a:    First surface
10b:    Second surface
20:     Metallic base material
30:     Iron-nickel alloy layer
40:     Metallic layer

50:     Roughened nickel layer
Ch1:    Potentiostat
Ch2:    Potentiostat

**Claims**

1.  A surface treated steel foil that is for a current collector and that has a first surface on which a hydrogen occluding alloy is disposed and a second surface located on a side opposite to the first surface, the surface treated steel foil comprising:

    an iron-nickel alloy layer that is laminated on at least one surface side of the first surface side and the second surface side on the side opposite to the first surface side of a metallic base material composed of steel foil and that restrains permeation or diffusion of hydrogen in the surface treated steel foil for a current collector, wherein at least one layer included in the iron-nickel alloy layer has a thickness of not less than 0.5 um.

2.  The surface treated steel foil for a current collector according to claim 1, wherein iron-nickel alloy layers are formed on both the first surface side and the second surface side of the surface treated steel foil for a current collector, and a total thickness of the iron-nickel alloy layers on both surface sides is not less than 0.7 um.

3.  The surface treated steel foil for a current collector according to claim 1 or 2, wherein the metallic base material is a low carbon steel or an ultra low carbon steel.

4.  The surface treated steel foil for a current collector according to any one of claims 1 to 3, wherein a deposition amount of nickel in the iron-nickel alloy layer is 0.80 to 53.4 g/m$^2$.

5.  The surface treated steel foil for a current collector according to any one of claims 1 to 4, further comprising:

    a metallic layer formed on the iron-nickel alloy layer,
    wherein the metallic layer is a nickel layer.

6.  The surface treated steel foil for a current collector according to claim 5, wherein a total nickel deposition amount in the iron-nickel alloy layer and the nickel layer is 2.0 to 53.4 g/m$^2$.

7.  The surface treated steel foil for a current collector according to any one of claims 1 to 6, wherein a hydrogen permeation current density measured electrochemically is not more than 20 $\mu$A/cm$^2$,
    where the hydrogen permeation current density is an increment of oxidation current measured on a hydrogen detection side when a potential of -1.5 V is applied on a hydrogen generation side under a condition in which a potential on the hydrogen detection side in a liquid electrolyte at 65°C is +0.4 V, with a reference electrode for potentials on the hydrogen detection side and the hydrogen generation side being Ag/AgCl.

8.  The surface treated steel foil for a current collector according to any one of claims 1 to 7, wherein a roughened nickel layer is formed at an outermost surface on either one of the first surface side and the second surface side, and a three-dimensional surface property parameter Sa of the roughened nickel layer is 0.2 to 1.3 um.

9.  A method for manufacturing a surface treated steel foil for a current collector, the method comprising:

    a step of forming an iron-nickel alloy layer that restrains permeation or diffusion of hydrogen in the surface treated steel foil for a current collector, on at least one surface side of a first surface side on which a hydrogen occluding alloy is disposed and a second surface side on a side opposite to the first surface side of a metallic base material,
    wherein the iron-nickel alloy layer is formed by a step of performing nickel plating and a step of performing a heat treatment after the nickel plating, or the iron-nickel alloy layer is formed by performing iron-nickel alloy plating.

10. The method for manufacturing the surface treated steel foil for a current collector according to claim 9, wherein a deposition amount of nickel in forming a nickel layer in the step of performing nickel plating is 0.80 to 53.4 g/m$^2$.

FIG. 1(a)

10

10b        30

20

10a

FIG. 1(b)

10

10b        20

30

10a

FIG. 1(c)

FIG. 2(a)

POTENTIOSTAT

Ch1
CE₁ RE₁ WE₁
WE
Ch2
WE₂ RE₂ CE₂

RE₁
RE₂
CE₁
CE₂

REFERENCE ELECTRODE

COUNTER ELECTRODE

HYDROGEN GENERATION SIDE (X)

HYDROGEN DETECTION SIDE (Y)

SURFACE TREATED STEEL FOIL (10)

FIG. 2(b)

EVALUATION WINDOW MEASUREMENT DIAMETER

φ20mm

FIG. 2(c)

FIG. 2(d)

Ia: OXIDATION CURRENT AT 5 s BEFORE APPLICATION OF -1.5 V
Ib: OXIDATION CURRENT AT 155 s AFTER START OF APPLICATION OF -1.5 V
Ic: OXIDATION CURRENT AT END OF APPLICATION OF -1.5 V
Id: OXIDATION CURRENT AT 155 s AFTER END OF APPLICATION OF -1.5 V

A: AVERAGE CURRENT DENSITY FROM Ib TO Ic
B: BACKGROUND (AVERAGE CURRENT DENSITY OF Ia AND Id)
A-B: HYDROGEN PERMEATION CURRENT DENSITY I ($\mu$A/cm$^2$)

FIG. 2(e)

EP 4 332 275 A1

FIG. 3

FIG. 4

FIG. 5(a)

FIG. 5(b)

FIG. 6

## INTERNATIONAL SEARCH REPORT

| | International application No. |
|---|---|
| | **PCT/JP2022/019466** |

### A. CLASSIFICATION OF SUBJECT MATTER

*C25D 7/06*(2006.01)i; *C25D 5/12*(2006.01)i; *C25D 5/14*(2006.01)i; *C25D 5/16*(2006.01)i; *C25D 5/26*(2006.01)i;
*C25D 5/50*(2006.01)i; *H01M 4/66*(2006.01)i
FI:   C25D7/06 Z; C25D5/12; C25D5/14; C25D5/16; C25D5/26 E; C25D5/26 L; C25D5/50; H01M4/66 A

According to International Patent Classification (IPC) or to both national classification and IPC

### B. FIELDS SEARCHED

Minimum documentation searched (classification system followed by classification symbols)

   C25D7/06; C25D5/12; C25D5/14; C25D5/16; C25D5/26; C25D5/50; H01M4/66

Documentation searched other than minimum documentation to the extent that such documents are included in the fields searched

   Published examined utility model applications of Japan 1922-1996
   Published unexamined utility model applications of Japan 1971-2022
   Registered utility model specifications of Japan 1996-2022
   Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2017-47466 A (NIPPON STEEL & SUMITOMO METAL CORP.) 09 March 2017 (2017-03-09) | 1-10 |
| A | JP 2007-5092 A (MATSUSHITA ELECTRIC IND. CO., LTD.) 11 January 2007 (2007-01-11) | 1-10 |
| A | WO 2013/157600 A1 (NIPPON STEEL & SUMITOMO METAL CORP.) 24 October 2013 (2013-10-24) | 1-10 |
| P, X | JP 2021-163639 A (NIPPON STEEL CHEMICAL & MATERIAL CO., LTD.) 11 October 2021 (2021-10-11)<br>paragraphs [0043], [0047], [0052] | 9-10 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **12 July 2022** | **26 July 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/019466**

| Patent document cited in search report | | | Publication date (day/month/year) | Patent family member(s) | | | Publication date (day/month/year) |
|---|---|---|---|---|---|---|---|
| JP | 2017-47466 | A | 09 March 2017 | (Family: none) | | | |
| JP | 2007-5092 | A | 11 January 2007 | US | 2009/0269661 | A1 | |
| | | | | WO | 2006/137403 | A1 | |
| | | | | EP | 1909342 | A1 | |
| | | | | CN | 101180748 | A | |
| | | | | KR | 10-2008-0005512 | A | |
| WO | 2013/157600 | A1 | 24 October 2013 | US | 2014/0287259 | A1 | |
| | | | | EP | 2770079 | A1 | |
| | | | | CN | 103917684 | A | |
| | | | | KR | 10-2014-0108214 | A | |
| JP | 2021-163639 | A | 11 October 2021 | WO | 2021/200506 | A1 | |

Form PCT/ISA/210 (patent family annex) (January 2015)

## REFERENCES CITED IN THE DESCRIPTION

**Patent documents cited in the description**

- JP 2020053401 A
- WO 2021020338 A
- WO 2020017655 A
- WO 2020020338 A

**Non-patent literature cited in the description**

- Electrochemical Measurements for Hydrogen Entry and Permeation of Steel. **TOORU TSURU.** Zairyo-to-Kankyo (Materials and Environments). Tokyo Institute Of Technology, 2014, vol. 63, 3-9